# FASCICULE DE BREVET EUROPEEN

(11) **EP 3 802 437 B1**
(45) Date de publication et mention de la délivrance du brevet: **01.04.2026**
(21) Numéro de dépôt: 19729450.7
(22) Date de dépôt: 22.05.2019
(51) Int. Cl.: C02F 1/461, C02F 1/467, C25B 1/26, C25B 15/04

(54) **INSTALLATION DE TRAITEMENT DE L'EAU, NOTAMMENT POUR L'ABREUVAGE DES ANIMAUX**
WASSERAUFBEREITUNGSANLAGE, INSBESONDERE ZUM TIERE TRÄNKEN
WATER TREATMENT PLANT, IN PARTICULAR FOR PROVIDING WATER FOR THE ANIMALS

(30) Priorité: 25.05.2018 FR 1854424
(43) Date de publication de la demande: 14.04.2021
(73) Titulaire: SAS Windwest, 17000 La Rochelle (FR)
(72) Inventeur: KLEIN, Nadège, 85120 ANTIGNY (FR); FERCHAUD, Bruno, 79380 SAINT MARSAULT (FR); LEYSSALE, Stéphane, 17000 LA ROCHELLE (FR)
(74) Mandataire: Aquinov
(86) Numéro de dépôt international: PCT/EP2019/063172
(87) Numéro de publication internationale: WO 2019/224226

(56) Documents cités:
- EP-A2- 2 914 763
- WO-A1-2016/005662
- JP-A- 2012 179 566

## Description

La présente invention concerne une installation de traitement de l'eau comprenant au moins une cellule d'électrolyse, notamment pour le traitement de l'eau pour l'abreuvage des animaux en vue de la rendre plus appétente. De telles eaux traitées peuvent également être utilisées plus particulièrement mais non exclusivement en industrie agroalimentaire, pour la consommation humaine.

On connait les demandes de brevet EP 2 914 763 et JP 2012 179566 qui décrivent des dispositifs d'électrolyse de l'eau avec séparation de phase et qui ne permettent pas de rendre de l'eau propre à la consommation humaine ou animale.

On connaît la demande de brevet français N° 16 53655, déposée au nom du même titulaire, qui présente un dispositif de traitement de l'eau potable par électrolyse.

Cette eau ainsi traitée provoque des changements de la structure ionique de l'eau et de l'état énergétique des éléments et des composés qui constituent ladite eau.

Le potentiel d'oxydoréduction est augmenté et contribue à détruire les matières organiques et à éliminer la contamination biologique.

L'eau à électrolyser doit être conductrice de l'électricité pour subir cette électrolyse et du chlorure de sodium doit être généralement adjoint afin de rendre l'eau conductrice mais cette adjonction doit être la plus limitée possible. Des quantités de l'ordre de 0,5 à 1 g/l sont parfaitement tolérées.

Cette solution, testée, donne toute satisfaction quant à la qualité de l'eau obtenue.

La difficulté est la variation de cette conductivité de l'eau car il est difficile de pouvoir traiter l'eau en continu pour ajuster sa conductivité à une valeur fixe.

Il serait donc particulièrement souhaitable de pouvoir disposer d'une telle installation avec un rendement optimisé en disposant d'une cellule d'électrolyse apte à s'adapter à la conductivité de l'eau, mesurée en fonction des différents paramètres associés comme le pH, la température, la conductance et la dureté. Le but est d'obtenir un effet biocide notamment par libération d'acide hypochloreux en solution. Cet acide faible est instable et ne perdure pas après son effet biocide. Il est nécessaire au traitement en vue de contribuer à améliorer la qualité de l'eau.

L'invention est aussi particulièrement intéressante en ce sens qu'elle génère peu de pertes de charge en facilitant la circulation dans la cellule d'électrolyse et en limitant très fortement les pertes entre les électrodes et les parois de la cellule, en limitant la dégradation des électrodes. L'invention est maintenant décrite en regard des dessins annexés, dessins sur lesquels les différentes figures annexées représentent :
- Figure 1 : une vue d'une installation comprenant une chambre d'électrolyse, interposée sur un réseau de fourniture d'eau, susceptible d'accueillir une cellule d'électrolyse asservie, selon la présente invention,
- Figure 2 : une vue de la cellule d'électrolyse de l'installation selon la présente invention.

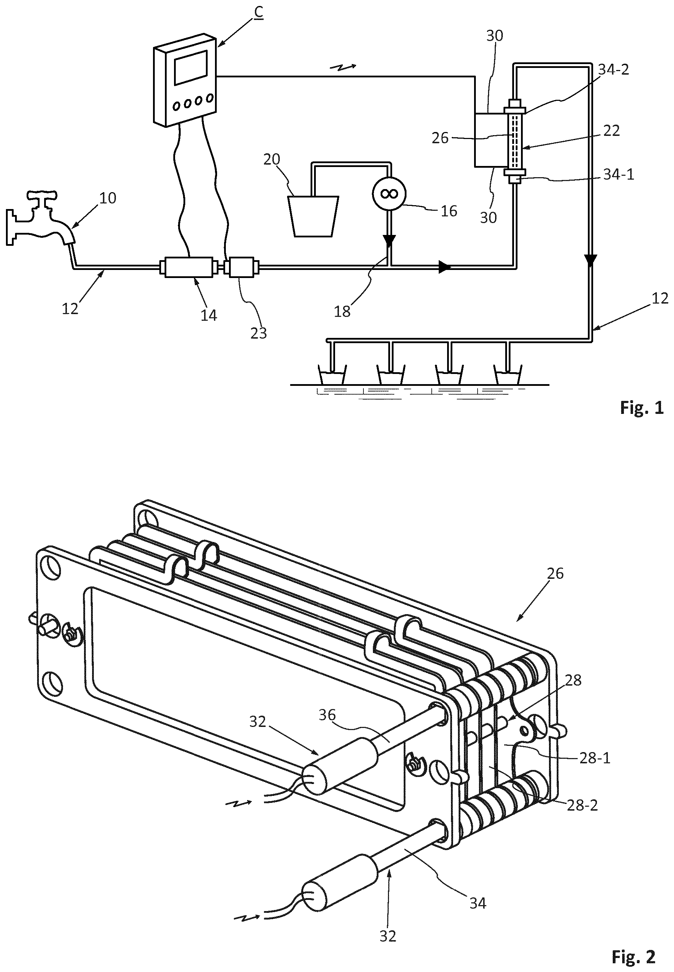

Sur la figure 1, on a représenté un schéma d'une installation comprenant une source d'eau provenant du réseau ou d'un forage. Sur la canalisation 12 d'alimentation issue de cette source 10, un débitmètre 14 est interposé, relié à une centrale de pilotage C.

Sur cette même canalisation 12, une pompe doseuse 16 est connectée par un piquage 18, en aval du débitmètre 14.

La pompe doseuse 16 est elle-même reliée à un bac 20 de saumure.

La chambre 22 d'électrolyse de l'installation selon la présente invention est interposée sur la canalisation 12 en aval du piquage 18. Cette chambre est connectée à la centrale de pilotage C.

En sortie de la chambre 22 d'électrolyse, l'eau peut être distribuée directement dans le cas d'un élevage par exemple comme représenté, ou stockée si nécessaire dans un réservoir tampon.

Cette chambre 22 d'électrolyse comprend au moins une cellule 26 d'électrolyse comprenant au moins un jeu de deux plaques 28 formant l'une 28-1 l'anode et l'autre 28-2 la cathode. Ces plaques 28 sont en matériau conducteur et alimentées par des câbles électriques 30, eux-mêmes reliés à la centrale de pilotage C.

La centrale de pilotage C dispose de la valeur du débit instantané au sein de la canalisation 12 et donc du débit à travers la chambre 22 d'électrolyse.

Ce débitmètre est aussi équipé de capteurs permettant de déterminer d'autres paramètres : le pH, la dureté, la température, la conductance, la dureté par exemple.

On peut mesurer également la conductivité de l'eau d'alimentation provenant de la source 10 d'eau avec des moyens de mesure 23 de la conductivité, reliés à la centrale de pilotage C, de façon à connaître la conductance G de l'eau, avant introduction de sel sous forme de saumure par la pompe doseuse 16 à travers le piquage 18, issue du bac 20 de saumure. Ces moyens de mesure de la conductivité de l'eau sont situés en amont de la cellule 26 d'électrolyse.

Ainsi la centrale de pilotage C dispose également de ce paramètre G. Dans la cellule d'électrolyse selon la présente invention et représentée sur la figure 2, les au moins deux plaques anode/cathode 28-1, 28-2 d'un même jeu sont montées mobiles en translation l'une par rapport à l'autre, de façon à adapter la conductance dans la cellule, en fonction de la conductivité de l'eau.

Des moyens de manœuvre 32 des plaques entre elles sont prévus au sein même de la cellule. Ces moyens de manœuvre 32 sont asservis à la mesure de la conductance.

Dans le cas de plusieurs jeux de plaques anode/cathode au sein d'une même cellule, toutes les anodes se déplacent simultanément par rapport à toutes les cathodes et/ou toutes les cathodes se déplacent simultanément par rapport à toutes les anodes. Les anodes et les cathodes restent reliées entre elles.

Il est possible de prévoir 8, 10 ou 12 plaques avec des espaces de 3, 4 ou 5 mm pour donner un exemple non limitatif.

Les moyens de manœuvre 32 assurent un mouvement relatif en translation des anodes par rapport aux cathodes en sorte de faire varier l'écart entre chaque anode et chaque cathode de chaque jeu respectif.

Le moyens de manœuvre 32 peuvent être mécaniques comme au moins une vis sans fin 34 motorisée, d'anode, vissant/dévissant dans un pas de vis de chaque plaque anode 28-1 et au moins une vis sans fin 36, de cathode vissant/dévissant dans un pas de vis de chaque plaque cathode 28-2.

Dans le mode de réalisation présenté, les vis peuvent être entraînées par des moteurs pas à pas, disposés à l'extérieur de la cellule d'électrolyse et dont l'arbre pénètre de façon étanche dans la dite cellule.

Les moyens de manœuvre 32 sont asservis à la mesure de la conductivité de l'eau en amont. Ainsi, la centrale de pilotage C peut modifier l'écartement des anodes/cathodes et ajuster aussi la force du courant nécessaire dans la cellule.

Le but d'un ajustement de l'écart des anodes/cathodes est d'obtenir une conductance naturelle la plus proche de 1 siemens.

La conductance G est proportionnelle à la surface immergée des électrodes et inversement proportionnelle à la distance qui les sépare donc la variation de l'écart des anodes/cathodes dans une même cellule permet de maintenir une conductance constante alors que l'ajustement de la conductivité par l'adjonction de saumure ne peut pas être aussi précis.

La conductance G est proportionnelle au rapport surface des électrodes/ écart entre lesdites électrodes.

Néanmoins, la conductivité σ de la solution influence ce rapport et notamment la nature des ions et leur concentration, de même pour la température qui agite plus ou moins lesdits ions. Ces paramètres sont disponibles dans la centrale de pilotage C sachant que la température est un paramètre qui varie néanmoins assez peu ou du moins lentement, par exemple en fonction des saisons.

Par contre, la conductivité varie car la quantité d'ions chlore et sodium varie en fonction de la quantité de saumure adjointe et des besoins.

La centrale de pilotage C peut alors compenser afin de maintenir la conductance à une valeur de 1 Siemens, quasiment constante.

Sont ainsi obtenus, par exemple avec un jeu de 8 plaques, les résultats suivants :

| | Jeu de 8 plaques | | |
|---|---|---|---|
| | Conductance en Siemens | | |
| **Conductivité** | Cellule en 3 | Cellule en 4 | Cellule en 5 |
| 0,25 | 0,62 | 0,43 | 0,30 |
| 0,45 | 1,12 | 0,78 | 0,54 |
| 0,70 | 1,75 | 1,21 | 0,84 |
| 1,00 | 2,50 | 1,73 | 1,20 |
| 1,25 | 3,12 | 2,16 | 1,51 |
| 1,45 | 3,62 | 2,50 | 1,75 |
| 1,70 | 4,25 | 2,93 | 2,05 |

Le maintien constant de cette conductance assure également une amélioration de la durée de vie des électrodes car elles ne subissent pas de fortes variations électriques.

## Revendications

1. Installation de traitement de l'eau, comprenant :
a. une source d'eau (10),
b. une canalisation (12) d'alimentation issue de cette source (10),
c. un débitmètre (14),
d. une pompe doseuse (16) reliée à un bac (20) de saumure, connectée par un piquage (18) en aval du débitmètre (14),
e. des moyens de mesure (23) de la conductivité de l'eau,
f. une chambre (22) d'électrolyse, interposée sur la canalisation (12) en aval du piquage (18), comprenant une cellule (26) d'électrolyse munie d'au moins un jeu de deux plaques (28) formant l'une (28-1) l'anode et l'autre (28-2) la cathode, en matériau conducteur et alimentées par des câbles électriques, lesdites plaques étant agencées au sein d'une même chambre, l'ensemble étant relié à une centrale de pilotage C, la cellule (26) d'électrolyse de la chambre (22) d'électrolyse comprenant des moyens de manœuvre (32) des plaques (28) pour assurer un mouvement relatif en translation des anodes par rapport aux cathodes en sorte de faire varier l'écart entre chaque anode et chaque cathode de chaque jeu de plaques (28) respectif ;
g. **caractérisé en ce que** la centrale de pilotage (C) est reliée aux moyens de mesure de la conductivité de l'eau, ces moyens de mesure de la conductivité de l'eau étant situés en amont de la cellule d'électrolyse et les moyens de manœuvre (32) des plaques de la cellule (26) d'électrolyse étant asservis à la conductance de l'eau mesurée par ces moyens de mesure (23) de la conductivité, la centrale de pilotage étant agencée pour modifier l'écart entre chaque anode et chaque cathode de chaque jeu de plaques respectif afin de conférer à l'eau une conductance la plus proche de 1 siemens.

2. Installation de traitement de l'eau selon la revendication 1, **caractérisée en ce que** les moyens de manœuvre (32) des plaques de la cellule (26) d'électrolyse sont mécaniques.

3. Installation de traitement de l'eau selon la revendication 2, **caractérisée en ce que** les moyens de manœuvre (32) des plaques de la cellule (26) d'électrolyse comprennent au moins un moteur pas à pas d'entraînement d'une vis sans fin pour la au moins une anode (28-1) et d'une vis sans fin pour la au moins une cathode (28-2).

4. Installation de traitement de l'eau selon l'une quelconque des revendications précédentes, **caractérisée en ce que** les anodes (28-1) et les cathodes (28-2) sont reliées entre elles.

## Patentansprüche

1. Wasseraufbereitungsanlage, umfassend:
a. eine Wasserquelle (10),
b. eine Versorgungsleitung (12), die von dieser Quelle (10) ausgeht,
c. einen Durchflussmesser (14),
d. eine Dosierpumpe (16), die mit einem Solebehälter (20) verbunden ist, die durch eine Rohrabzweigung (18) stromabwärts des Durchflussmessers (14) angeschlossen ist,
e. Mittel zum Messen (23) der Leitfähigkeit des Wassers,
f. eine Elektrolysekammer (22), die auf der Leitung (12) stromabwärts der Rohrabzweigung (18) zwischengeschaltet ist, umfassend eine Elektrolysezelle (26), die mit mindestens einem Satz von zwei Platten (28) versehen ist, wobei die eine (28-1) die Anode und die andere (28-2) die Kathode ausbildet, die aus leitfähigem Material bestehen und durch elektrische Kabel versorgt werden, wobei die Platten innerhalb einer gleichen Kammer angeordnet sind, wobei die Baugruppe mit einer Steuerzentrale C verbunden ist, die Elektrolysezelle (26) der Elektrolysekammer (22) umfassend Betätigungsmittel (32) der Platten (28) zum Gewährleisten einer relativen Translationsbewegung der Anoden relativ zu den Kathoden, um den Abstand zwischen jeder Anode und jeder Kathode jedes jeweiligen Plattensatzes (28) zu variieren;
g. **dadurch gekennzeichnet, dass** die Steuerzentrale (C) mit den Mitteln zum Messen der Leitfähigkeit des Wassers verbunden ist, wobei diese Mittel zum Messen der Leitfähigkeit des Wassers stromaufwärts der Elektrolysezelle angeordnet sind und die Betätigungsmittel (32) der Platten der Elektrolysezelle (26) an die Leitfähigkeit des Wassers gebunden sind, die durch diese Mittel zum Messen (23) der Leitfähigkeit gemessen wird, wobei die Steuerzentrale zum Modifizieren des Abstands zwischen jeder Anode und jeder Kathode jedes jeweiligen Plattensatzes angeordnet ist, um dem Wasser eine Leitfähigkeit zu verleihen, die möglichst nahe bei 1 Siemens liegt.

2. Wasseraufbereitungsanlage nach Anspruch 1,
**dadurch gekennzeichnet, dass** die Betätigungsmittel (32) der Platten der Elektrolysezelle (26) mechanisch sind.

3. Wasseraufbereitungsanlage nach Anspruch 2,
**dadurch gekennzeichnet, dass** die Betätigungsmittel (32) der Platten der Elektrolysezelle (26) mindestens einen Schrittmotor zum Antrieb einer Schnecke für die mindestens eine Anode (28-1) und einer Schnecke für die mindestens eine Kathode (28-2) umfassen.

4. Wasseraufbereitungsanlage nach einem der vorstehenden Ansprüche,
**dadurch gekennzeichnet, dass** die Anoden (28-1) und die Kathoden (28-2) miteinander verbunden sind.

## Claims

1. Water treatment installation, comprising:
a. a water source (10),
b. a supply pipe (12) from this source (10),
c. a flowmeter (14),
d. a dosing pump (16) linked to a brine tank (20), connected by a branch line (18) downstream of the flowmeter (14),
e. means (23) for measuring the water conductivity,
f. an electrolysis chamber (22), interposed on the pipe (12) downstream of the branch line (18), comprising an electrolysis cell (26) provided with at least one set of two plates (28), one (28-1) forming the anode and the other (28-2) the cathode, made of conductive material and powered by electric cables, said plates being arranged within the same chamber, the assembly being linked to a control unit C, the electrolysis cell (26) of the electrolysis chamber (22) comprising means (32) for maneuvering the plates (28) to ensure relative translational movement of the anodes with respect to the cathodes so as to vary the distance between each anode and each cathode of each respective set of plates (28);
g. **characterized in that** the control unit (C) is linked to means for measuring the conductivity of the water, these means for measuring the conductivity of the water being located upstream of the electrolysis cell and the means (32) for maneuvering the plates of the electrolysis cell (26) being slaved to the conductance of the water measured by these means (23) for measuring the conductivity, the control unit being arranged to modify the distance between each anode and each cathode of each respective set of plates in order to give the water a conductance as close as possible to 1 siemens.

2. Water treatment installation according to claim 1, **characterized in that** the means (32) for maneuvering the plates of the electrolysis cell (26) are mechanical.

3. Water treatment installation according to claim 2, **characterized in that** the means (32) for maneuvering the plates of the electrolysis cell (26) comprise at least one stepper motor driving a worm screw for the at least one anode (28-1) and a worm screw for the at least one cathode (28-2).

4. Water treatment installation according to any of the preceding claims,
**characterized in that** the anodes (28-1) and the cathodes (28-2) are linked to one another.
